# FASCICULE DE BREVET EUROPEEN

(11) **EP 2 186 457 B1**
(45) Date de publication et mention de la délivrance du brevet: **20.02.2013**
(21) Numéro de dépôt: 09356056.3
(22) Date de dépôt: 04.11.2009
(51) Int. Cl.: A47J 42/16

(54) **Moulin à grains comportant un dispositif d'entrée des grains comprenant un organe d'entraînement rotatif**
Mühle für Körner mit einer Zuführungsvorrichtung für die Körner und einer rotatorischen Antriebsvorrichtung
Grain-mill with a feeding device for the grains and with a rotational driving device

(30) Priorité: 10.11.2008 FR 0806259
(43) Date de publication de la demande: 19.05.2010
(73) Titulaire: SEB SA, 69130 Ecully (FR)
(72) Inventeur: Balan, Lionel, 50000 Saint LÔ (FR)
(74) Mandataire: Kiehl, Hubert

(56) Documents cités:
- EP-A- 1 493 368
- WO-A-2008/059545

## Description

La présente invention se rapporte à un moulin à grains comportant deux disques de mouture qui délimitent entre eux une chambre de broyage et se rapporte plus particulièrement à un moulin à grains dans lequel l'un des disques de mouture comporte une ouverture pour l'introduction des grains qui est alimentée par un dispositif d'entrée des grains recevant un organe d'entraînement rotatif.

Il est connu de la demande de brevet WO 2008/059545 un moulin à grains comportant un disque de mouture fixe et un disque de mouture mobile définissant entre eux une chambre de broyage, le disque de mouture fixe comportant une ouverture centrale traversée par une vis d'alimentation verticale dont l'extrémité inférieure est fixée au centre du disque de mouture mobile. Dans ce document, l'ouverture centrale de la meule fixe est alimentée par un dispositif d'entrée de grains comportant une paroi périphérique présentant une surface lisse, la vis d'alimentation comportant une nervure hélicoïdale tendant à amener les grains au travers de l'ouverture du disque de mouture lors de sa rotation.

Une telle vis d'alimentation à nervure hélicoïdale présente cependant l'inconvénient de présenter une forme complexe ne lui permettant pas d'être moulée directement avec le support du disque de mouture. De plus, un tel système d'entraînement des grains présente l'inconvénient de permettre aux grains de café de rebondir hors de la zone de broyage, le long de la paroi périphérique du dispositif d'entrée de grains du moulin, lorsqu'ils arrivent dans une zone de compression à l'entrée de la chambre de broyage. Il s'ensuit une alimentation inconstante du moulin et donc une altération du débit à la sortie de ce dernier.

Or, la plupart des machines à café se basent sur le nombre de tours effectués par les disques de meule pour déterminer la quantité de café distribuée par le moulin. Ainsi, la régularité du débit du moulin à grains est particulièrement importante pour l'obtention d'une machine à café performante, la quantité de café introduite dans la chambre de percolation de la machine à café ayant une influence particulièrement importante sur le goût du café préparé.

Aussi, un but de la présente invention est de proposer un moulin à grains possédant un dispositif d'entrée de grains perfectionné permettant d'améliorer la régularité et le débit du moulin à grains.

A cet effet, l'invention a pour objet un moulin à grains, notamment pour machine à café, comportant un corps recevant deux disques de mouture en vis-à-vis qui délimitent entre eux une chambre de broyage alimentée par un dispositif d'entrée des grains comportant un organe d'entraînement rotatif, **caractérisé en ce que** le dispositif d'entrée des grains comporte un conduit d'entrée, s'étendant autour de l'organe d'entraînement rotatif, comprenant au moins une nervure faisant saillie en direction de l'organe d'entraînement rotatif.

Selon une autre caractéristique de l'invention, la chambre de broyage comporte une ouverture d'introduction des grains au centre de l'un des disques de mouture et une fente de mouture périphérique.

Selon encore une autre caractéristique de l'invention, le disque de mouture comportant l'ouverture d'introduction des grains est un disque de mouture fixe et l'autre disque de mouture est un disque de mouture mobile entraîné en rotation par un moteur.

Selon encore une autre caractéristique de l'invention, la nervure présente une forme adaptée pour guider les grains en direction de la chambre de broyage lorsqu'ils sont entraînés en rotation par l'organe d'entraînement rotatif.

Selon une autre caractéristique de l'invention, la nervure présente la forme d'une rampe inclinée en direction des disques de mouture.

Selon une autre caractéristique de l'invention, le conduit d'entrée comporte plusieurs nervures saillantes de forme hélicoïdale.

Selon une autre caractéristique de l'invention, la nervure s'étend radialement jusqu'à proximité de la périphérie de l'organe d'entraînement rotatif.

Selon encore une autre caractéristique de l'invention, l'organe d'entraînement rotatif comporte un axe, orienté verticalement au centre de l'ouverture d'introduction des grains, comportant quatre nervures verticales sur sa périphérie.

Selon une autre caractéristique de l'invention, le conduit d'entrée est porté par une bague de guidage sur laquelle est fixé le disque de mouture fixe.

Selon une autre caractéristique de l'invention, la bague de guidage est solidaire d'un couvercle qui est vissé sur le corps du moulin à grains de manière à permettre le réglage de l'écartement entre le disque de mouture fixe et le disque de mouture mobile.

Selon une autre caractéristique de l'invention, l'organe d'entraînement rotatif est fixé au centre du disque de mouture mobile.

L'invention concerne également un appareil pour la préparation de café comportant un bac à grains en communication avec un moulin à grains, **caractérisé en ce que** le moulin à grains est conforme au moulin à grains précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil pour la préparation de café comportant un moulin à grains selon un mode particulier de réalisation de l'invention ;
- la figure 2 est une vue en perspective du moulin à grains équipant l'appareil de la figure 1 ;
- la figure 3 est une vue en perspective éclatée du moulin à grains de la figure 2;
- la figure 4 est une vue en coupe du moulin de la figure 2 surmonté du bac à grain de l'appareil de la figure 1 ;
- la figure 5 est une vue de dessus de la bague de guidage définissant l'entrée du moulin à grains;
- la figure 6 est une vue en coupe selon la ligne VI-VI de la figure 5.

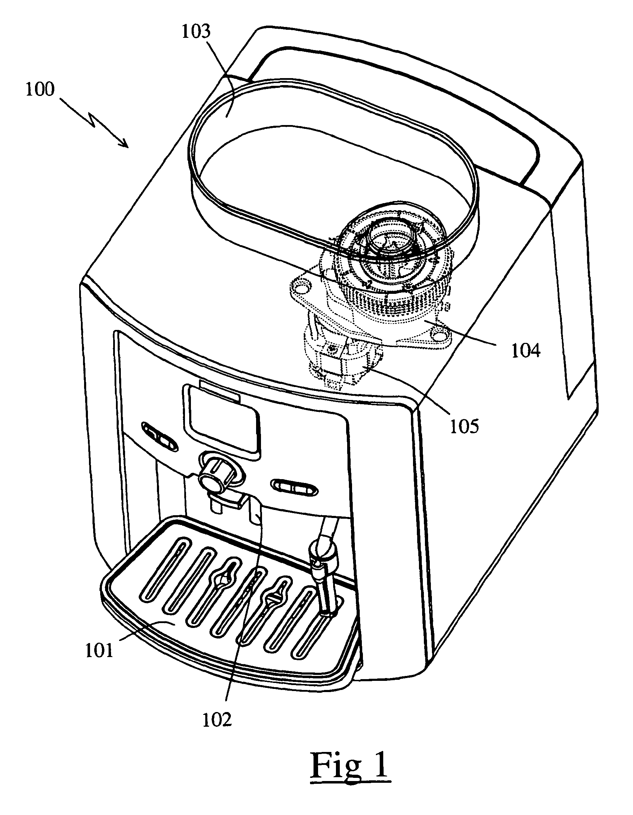

La figure 1 illustre un appareil 100 pour la préparation de café expresso comportant une face avant comportant un socle 101 pour la réception d'une tasse, ce socle étant surmonté d'une buse à deux sorties 102 pour l'écoulement du café. L'appareil 100 comporte, de manière connue en soi, une face supérieure équipée d'un bac à grains 103 alimentant un moulin à grains 104 entraîné en rotation par un moteur 105, représentés en pointillé sur cette figure.

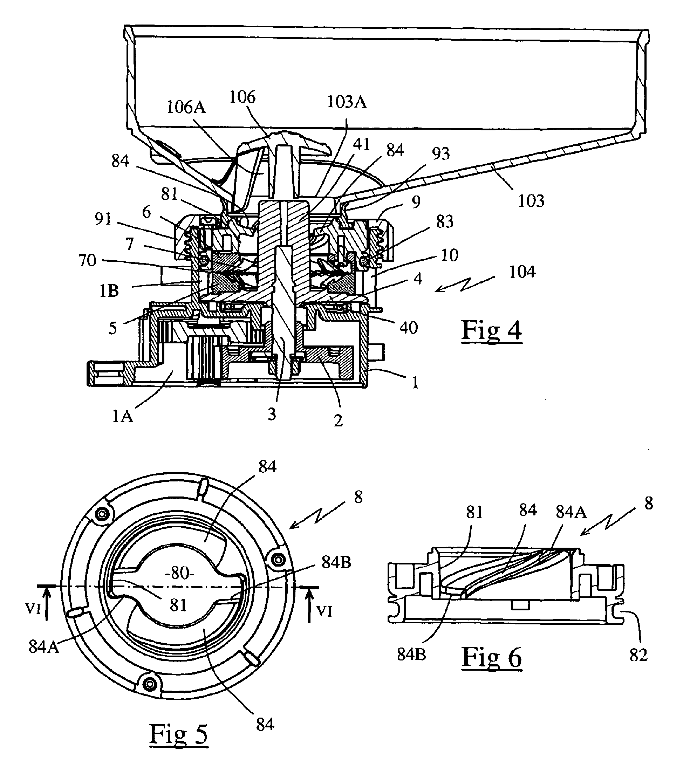

Le moulin à grains 104, représenté en coupe avec le bac à grains 103 sur la figure 4, comporte un corps 1 comprenant un logement inférieur 1 A renfermant un réducteur de vitesse 2 constitué par un train d'engrenages assurant une réduction de l'ordre de quarante entre la vitesse d'entraînement du moteur 105 et un arbre d'entraînement 3 du moulin à grains.

Le corps 1 du moulin à grains comporte, au dessus du logement inférieur 1 A, un logement cylindrique 1 B ouvert à son extrémité supérieure et recevant un support rotatif 4 entraîné par l'arbre d'entraînement 3.

Le support rotatif 4 comporte une embase 40, s'étendant dans le fond du logement cylindrique 1 B, sur laquelle un disque de mouture rotatif 5 est fixé par des vis. Le support rotatif 4 comporte également un organe d'entraînement rotatif 41 faisant verticalement saillie au centre du disque de mouture rotatif 5.

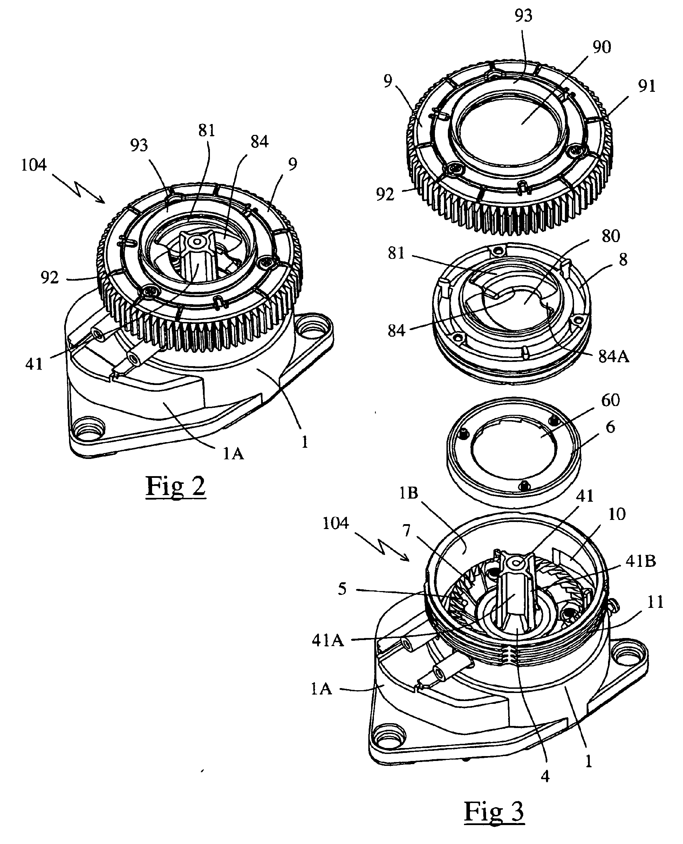

Conformément aux figures 2 et 3, le logement cylindrique 1 B reçoit un disque de mouture fixe 6 venant coaxialement au dessus du disque de mouture rotatif 5 pour délimiter avec ce dernier une chambre de broyage 7 comprenant une fente de mouture 70 périphérique, le logement cylindrique 1 B comportant, en regard de la fente de mouture 70, une fenêtre 10 permettant l'évacuation du café moulu en direction d'une chambre de percolation de l'appareil.

La chambre de broyage 7 est alimentée en grains au travers d'une ouverture centrale 60 réalisée dans le disque de mouture fixe 6, le moulin à grains 104 comportant, en amont de cette ouverture centrale 60, un dispositif d'entrée des grains comprenant une bague de guidage 8 disposée dans l'extrémité supérieure du logement cylindrique 1 B. Le disque de mouture fixe 6 est fixé sur la bague de guidage 8, cette dernière comportant une ouverture centrale 80 définissant un conduit d'entrée 81 des grains venant dans le prolongement de l'ouverture centrale 60 du disque de mouture fixe 6.

A titre d'exemple, le logement cylindrique 1 B présente un diamètre intérieur de l'ordre de 61 mm, les disques de mouture rotatif 5 et fixe 6 étant constitués par des meules plates, en métal ou céramique, présentant un diamètre intérieur de l'ordre de 31 mm et un diamètre extérieur de l'ordre de 50 mm, la bague de guidage 8 présentant un diamètre extérieur de l'ordre de 59 mm et le conduit d'entrée 81 un diamètre de l'ordre de 31 mm.

Conformément à la figure 4, la bague de guidage 8 comporte une gorge périphérique 82 recevant un joint torique 83 venant au contact de la paroi interne du logement cylindrique 1 B afin de former une barrière d'étanchéité évitant la remontée de poudre de café vers l'extrémité supérieure du logement cylindrique 1 B.

La bague de guidage 8 est fixée sur un couvercle 9 comportant une ouverture 90 dans le prolongement du conduit d'entrée 81 de la bague de guidage 8, le couvercle 9 comportant avantageusement une jupe périphérique 91 qui est vissée sur un filetage 11 porté par l'extrémité supérieure du logement cylindrique 1 B. Ainsi, une rotation plus ou moins importante du couvercle 9 sur le logement cylindrique 1 B permet de régler l'écartement entre les disques de mouture 5, 6 et donc la granulométrie du café à la sortie du moulin à grains 104.

De manière à permettre un réglage électrique, éventuellement automatisé, de la distance entre les disques de mouture 5,6, la jupe périphérique 91 du couvercle 9 est munie d'une série de dents 92 formant une couronne sur laquelle peut être engrainé un pignon entraîné par un moteur, non représentés sur les figures.

L'ouverture 90 du couvercle est bordée d'une collerette 93 venant dans le prolongement d'un orifice d'alimentation 103A disposé dans le fond du bac à grains 103, ce dernier comportant, de manière connue en soi, un cache de sécurité 106 empêchant l'introduction accidentelle d'un doigt dans le moulin à grain, le cache de sécurité 106 comportant des ouvertures latérales 106A pour l'écoulement des grains vers la bague de guidage 8.

Plus particulièrement selon l'invention, le conduit d'entrée 81 du dispositif d'entrée de grains comporte deux nervures 84 faisant saillie vers l'organe d'entraînement rotatif 41.

Conformément aux figures 5 et 6, ces nervures 84 présentent avantageusement une forme hélicoïdale pour guider les grains de café en direction de l'ouverture centrale 60 du disque de mouture fixe 6.

A titre d'exemple, ces deux nervures 84 hélicoïdales sont disposées symétriquement à 180° l'une de l'autre et s'étendent sur une portion angulaire de l'ordre de 160°, chaque nervure 84 comportant une extrémité supérieure formant un bord d'attaque 84A qui est disposé axialement environ 13 mm plus haut que le bord de fuite 84B défini par l'extrémité inférieure de la nervure 84.

De manière avantageuse, les nervures 84 s'étendent en direction de l'organe d'entraînement rotatif 41 sur une hauteur radiale supérieure à 3 mm et préférentiellement sur une hauteur de l'ordre de 4,5 mm, de manière à masquer partiellement l'ouverture centrale 60 du disque de mouture fixe 6.

Conformément à la figure 3, l'organe d'entraînement rotatif 41 comporte un axe central 41 A s'étendant verticalement au travers du conduit d'entrée 81 et parvenant à proximité de l'extrémité inférieure du cache de sécurité 106 porté par le bac à grains 103.

Cet axe central 41 A supporte quatre palettes 41 B, disposées à 90° les unes des autres, assurant le brassage et l'entraînement en rotation des grains s'écoulant par gravité depuis l'orifice d'alimentation 103A du bac à grains, les palettes 41 B s'étendant verticalement sur toute la hauteur de l'axe central 41 A et comportant une arête venant à proximité immédiate du bord des nervures 84, de préférence à une distance inférieure à 3 mm.

A titre d'exemple, l'axe central 41 A présente une forme générale légèrement tronconique d'un diamètre de l'ordre de 10 mm et une hauteur de l'ordre de 30 mm, les quatre palettes 41 B s'étendant radialement sur une hauteur de l'ordre de 3 à 4 mm. La base de l'axe central 41 A comporte préférentiellement des parois inclinées entre les palettes 41 B tendant à repousser les grains de café vers la périphérie de la chambre de broyage 7.

Le moulin à grains ainsi réalisé présente l'avantage de posséder une meilleure régularité de fonctionnement, les grains présents dans le fond du bac à grains étant entraînés vers le conduit d'entrée de la bague de guidage par gravité, puis entraînés en rotation dans le sens anti-horaire par les palettes de l'organe d'entraînement rotatif, les grains étant alors guidés vers le bas par les nervures hélicoïdales.

Les nervures hélicoïdales présentent, en particulier, l'avantage d'éviter les rebonds des grains de café hors de la chambre de broyage, le long de l'extérieur de la zone d'entrée du broyeur, lorsqu'ils parviennent à l'entrée de la chambre de broyage et sont comprimés.

Un tel moulin à grains présente ainsi l'avantage de posséder un débit nettement amélioré grâce à une alimentation plus constante et régulière de la chambre de broyage.

Enfin, un tel moulin présente l'avantage de posséder un organe d'entraînement rotatif qui peut être moulé directement avec l'embase du support rotatif, permettant ainsi d'avoir un coût de fabrication réduit.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation les nervures pourront présenter une forme annulaire conique, au lieu d'hélicoïdale.

## Revendications

1. Moulin à grains (104), notamment pour machine à café, comportant un corps (1) recevant deux disques de mouture (5, 6) en vis-à-vis qui délimitent entre eux une chambre de broyage (7), la chambre de broyage (7) étant alimentée par un dispositif d'entrée des grains comportant un organe d'entraînement rotatif (41), **caractérisé en ce que** ledit dispositif d'entrée des grains comporte un conduit d'entrée (81), s'étendant autour de l'organe d'entraînement rotatif (41), comprenant au moins une nervure (84) faisant saillie en direction de l'organe d'entraînement rotatif (41).

2. Moulin à grains (104) selon la revendication 1, **caractérisé en ce que** la chambre de broyage (7) comporte une ouverture (60) d'introduction des grains au centre de l'un des disques de mouture (5, 6) et une fente de mouture (70) périphérique.

3. Moulin à grains (104) selon la revendication 2, **caractérisé en ce que** le disque de mouture comportant l'ouverture (60) d'introduction des grains est un disque de mouture fixe (6) et l'autre disque de mouture est un disque de mouture mobile (5) entraîné en rotation par un moteur (105).

4. Moulin à grains (104) selon l'une quelconque des revendications 1 à 3, **caractérisé en ce que** la nervure (84) présente une forme adaptée pour guider les grains en direction de la chambre de broyage (7) lorsqu'ils sont entraînés en rotation par l'organe d'entraînement rotatif (41).

5. Moulin à grains(104) selon la revendication 4, **caractérisé en ce que** ladite nervure (84) présente la forme d'une rampe inclinée en direction des disques de mouture (5, 6).

6. Moulin à grains (104) selon la revendication 5, **caractérisé en ce que** ledit conduit d'entrée (81) comporte plusieurs nervures saillantes de forme hélicoïdale.

7. Moulin à grains (104) selon l'une quelconque des revendications 1 à 6, **caractérisé en ce que** ladite nervure (84) s'étend radialement jusqu'à proximité de la périphérie de l'organe d'entraînement rotatif (41).

8. Moulin à grains (104) selon l'une quelconque des revendications 1 à 7, **caractérisé en ce que** l'organe d'entraînement rotatif (41) comporte un axe (41 A), orienté verticalement au centre de l'ouverture (60) d'introduction des grains, comportant quatre nervures (84) verticales sur sa périphérie.

9. Moulin à grains (104) selon l'une quelconque des revendications 1 à 8, **caractérisé en ce que** ledit conduit d'entrée (81) est porté par une bague de guidage (8) sur laquelle est fixé le disque de mouture fixe (6).

10. Moulin à grains (104) selon la revendication 9, **caractérisé en ce que** ladite bague de guidage (8) est solidaire d'un couvercle (9) qui est vissé sur le corps (1) du moulin à grains de manière à permettre le réglage de l'écartement entre le disque de mouture fixe (6) et le disque de mouture mobile (5).

11. Moulin à grains (104) selon l'une quelconque des revendications 1 à 10, **caractérisé en ce que** l'organe d'entraînement rotatif (41) est fixé au centre du disque de mouture mobile (5).

12. Appareil pour la préparation de café comportant un bac à grains (103) en communication avec un moulin à grains (104), **caractérisé en ce que** ledit moulin à grains (104) est conforme à l'une des revendications 1 à 11.

## Claims

1. A coffee grinder (104), particularly for coffee machines, comprising a body (1) receiving two grinding discs (5, 6) which are opposite to each other and which delimit a grinding chamber (7), the grinding chamber (7) being supplied with coffee beans by a bean inlet device comprising a rotary driving unit (41), **characterised in that** said bean inlet device includes an inlet conduit (81) extending around the rotary driving unit (41), comprising at least one rib (84) projecting towards the rotary driving unit (41).

2. A coffee grinder (104) according to claim 1, **characterised in that** the grinding chamber (7) contains an opening (60) for introducing beans to the centre of one of the grinding discs (5, 6) and a peripheral ground coffee slot (70).

3. A coffee grinder (104) according to claim 2, **characterised in that** the grinding disc containing the opening (60) for introducing beans is a fixed grinding disc (6) and the other grinding disc is a movable grinding disc (5) driven in rotation by a motor (105).

4. A coffee grinder (104) according to any one of claims 1 to 3, **characterised in that** the rib (84) is shaped suitably to guide the beans towards the grinding chamber (7) when they are driven in rotation by the rotary driving unit (41).

5. A coffee grinder (104) according to claim 4, **characterised in that** said rib (84) has the form of a ramp inclined towards the grinding discs (5, 6).

6. A coffee grinder (104) according to claim 5, **characterised in that** said inlet conduit (81) contains several helical projecting ribs.

7. A coffee grinder (104) according to any one of claims 1 to 6, **characterised in that** said rib (84) extends radially to the vicinity of the periphery of the rotary driving unit (41).

8. A coffee grinder (104) according to any one of claims 1 to 7, **characterised in that** the rotary driving unit (41) contains an axis (41A), oriented vertically to the centre of the opening (60) for introducing beans, comprising four vertical ribs (84) on the periphery thereof.

9. A coffee grinder (104) according to any one of claims 1 to 8, **characterised in that** said inlet conduit (81) is carried by a guiding ring (8) on which the fixed grinding disc (6) is attached.

10. A coffee grinder (104) according to claim 9, **characterised in that** said guiding ring (8) is integral with a lid (9) which is screwed onto the body (1) of the coffee grinder so as to allow the adjustment of the distance between the fixed grinding disc (6) and the movable grinding disc (5).

11. A coffee grinder (104) according to any one of claims 1 to 10, **characterised in that** the rotary driving unit (41) is attached to the centre of the movable grinding disc (5).

12. A coffee maker comprising a bean container (103) communicating with a coffee grinder (104), **characterised in that** said coffee grinder (104) complies with one of claims 1 to 11.

## Patentansprüche

1. Körnermühle (104), insbesondere für eine Kaffeemaschine, umfassend einen Körper (1), der zwei gegenüberliegende Mahlscheiben (5, 6) aufnimmt, die zwischen sich eine Zerkleinerungskammer (7) begrenzen, wobei die Zerkleinerungskammer (7) von einer Körnereintrittsvorrichtung gespeist wird, die ein Drehantriebsorgan (41) umfasst, **dadurch gekennzeichnet, dass** die Körnereintrittsvorrichtung einen Eintrittskanal (81) umfasst, der sich um das Drehantriebsorgan (41) herum erstreckt und der wenigstens eine Rippe (84) aufweist, die in Richtung Drehantriebsorgan (41) vorspringt.

2. Körnermühle (104) nach Anspruch 1, **dadurch gekennzeichnet, dass** die Zerkleinerungskammer (7) eine Öffnung (60) zum Einführen der Körner in die Mitte einer der Mahlscheiben (5, 6) und einen umlaufenden Mahlschlitz (70) umfasst

3. Körnermühle (104) nach Anspruch 2, **dadurch gekennzeichnet, dass** die Mahlscheibe, die die Öffnung (60) zum Einführen der Körner umfasst, eine festsitzende Mahlscheibe (6) und die andere Mahlscheibe eine bewegliche Mahlscheibe (5) ist, die von einem Motor (105) in Drehung versetzt wird.

4. Körnermühle (104) nach einem der Ansprüche 1 bis 3, **dadurch gekennzeichnet, dass** die Rippe (84) eine geeignete Form aufweist, um die Körner in Richtung Zerkleinerungskammer (7) zu führen, wenn sie vom Drehantriebsorgan (41) in Drehung versetzt werden.

5. Körnermühle (104) nach Anspruch 4, **dadurch gekennzeichnet, dass** die Rippe (84) die Form einer Rampe aufweist, welche in Richtung Mahlscheiben (5, 6) geneigt ist.

6. Körnermühle (104) nach Anspruch 5, **dadurch gekennzeichnet, dass** der Eintrittskanal (81) mehrere vorspringende, schneckenförmige Rippen umfasst.

7. Körnermühle (104) nach einem der Ansprüche 1 bis 6, **dadurch gekennzeichnet, dass** sich die Rippe (84) radial bis in die Nähe des Randes des Drehantriebsorgans (41) erstreckt.

8. Körnermühle (104) nach einem der Ansprüche 1 bis 7, **dadurch gekennzeichnet, dass** das Drehantriebsorgan (41) eine Achse (41A) umfasst, die in der Mitte der Öffnung (60) zum Einführen der Körner vertikal ausgerichtet ist, umfassend vier vertikale Rippen (84) an ihrem Rand.

9. Körnermühle (104) nach einem der Ansprüche 1 bis 8, **dadurch gekennzeichnet, dass** der Eintrittskanal (81) von einem Führungsring (8) getragen wird, auf dem die festsitzende Mahlscheibe (6) befestigt ist.

10. Körnermühle (104) nach Anspruch 9, **dadurch gekennzeichnet, dass** der Führungsring (8) fest mit einem Deckel (9) verbunden ist, der auf den Körper (1) der Körnermühle geschraubt wird, so dass die Einstellung des Abstandes zwischen der festsitzenden Mahlscheibe (6) und der beweglichen Mahlscheibe (5) ermöglicht wird.

11. Körnermühle (104) nach einem der Ansprüche 1 bis 10, **dadurch gekennzeichnet, dass** das Drehantriebsorgan (41) in der Mitte der beweglichen Mahlscheibe (5) befestigt ist.

12. Gerät für die Kaffeezubereitung, umfassend einen Körnerbehälter (103), der mit einer Körnermühle (104) verbunden ist, **dadurch gekennzeichnet, dass** die Körnermühle (104) einem der Ansprüche 1 bis 11 entspricht.
